**Europäisches Patentamt**

**European Patent Office**

**Office européen des brevets**

(19)

(11) Veröffentlichungsnummer: **0 162 368**
**A2**

# (12) EUROPÄISCHE PATENTANMELDUNG

(21) Anmeldenummer: **85105564.0**

(22) Anmeldetag: **07.05.85**

(51) Int. Cl.⁴: **B 01 J 19/14**
**E 21 B 43/16**

(30) Priorität: **19.05.84 DE 3418699**

(43) Veröffentlichungstag der Anmeldung:
**27.11.85 Patentblatt 85/48**

(84) Benannte Vertragsstaaten:
**AT BE CH FR GB IT LI NL SE**

(71) Anmelder: **LGA Gastechnik GmbH**
**Bonner Strasse 10**
**D-5480 Remagen 6(DE)**

(72) Erfinder: **Lehmann, Erich, Dipl.-Ing.**
**Nürburgweg 2**
**D-5484 Bad Breisig 2(DE)**

(54) **Vorrichtung zur Erzeugung von Injektionsgas, vorzugsweise zum Austreiben von Erdöl aus Lagerstätten.**

(57) Die Vorrichtung dient zur Erzeugung von Inertgas, das aus einem Gemisch aus Verbrennungsgas und Stickstoff besteht. In einer thermischen Energieerzeugungsanlage (10,17,18) wird Brennstoff unter Luftzufuhr stöchiometrisch verbrannt. Die entstehenden Abgase werden einem Abhitze-Kessel (18) zugeführt. Der Abhitze-Kessel (18) versorgt einen Dampfkreislauf, der mehrere Dampfturbinen (24,25) enthält. Die eine Dampfturbine (25) treibt den Kompressor (31) einer Luftzerlegungsanlage (32), deren Stickstoff-Fraktion (N) entweder mit dem Abgas vermischt oder der thermischen Energieerzeugungsanlage zugeführt wird. Das Injektionsgas kann mit der Energie der thermischen Energieerzeugungsanlage komprimiert werden, um Erdöl aus Lagerstäten auszutreiben.

EP 0 162 368 A2

./...

Croydon Printing Company Ltd.

FIG.1

-1-

Vorrichtung zur Erzeugung von Injektionsgas, vor.ugs-
weise zum Austreiben von Erdöl aus Lagerstätten

Die Erfindung betrifft eine Vorrichtung nach dem Cberbegriff des Patentanspruchs 1.

Es ist bekannt, zur Steigerung der Ausbeute von Öllagerstätten bestimmte Gase, wie z.B. Stickstoff oder
ein durch Verbrennen von Kohlenwasserstoffen gewonnenes
Gemisch aus Stickstoff und Kohlendioxid einzupressen.
Das Gas muß in großen Mengen kostengünstig erzeugt
werden können.

Konventionelle Anlagen zur Erzeugung von Verbrennungsgas für den genannten Zweck bestehen in der Regel aus
einer Brennkammer und einer Kühleinrichtung für das in
der Brennkammer erzeugte Abgas. Es ist auch bekannt,
als Verbrennungseinrichtung eine Gasturbine mit geschlossenem Kreislauf zu verwenden, die dazu dient,
einen Kompressor für die Abgase anzutreiben (DE-OS
32 28 091). Obwohl hierbei die mechanische Energie der
das Abgas erzeugenden Gasturbine ausgenutzt wird, um ein weiteres Aggregat anzutreiben, ist die Gasausbeute im Verhältnis zur aufgewandten Energie immer noch sehr gering.

Es ist ferner bekannt, für den genannten Zweck Stickstoff zu verwenden, der durch Zerlegen von Luft in Sauerstoff und Stickstoff mit einer Luftzerlegungsanlage gewonnen wird. Dabei ist der Energiebedarf zur Erzeugung einer Normvolumeneinheit Stickstoff geringer als zur Erzeugung einer Normvolumeneinheit Verbrennungsgas nach dem zuvor beschriebenen Verfahren. Andererseits erfordert eine Luftzerlegungsanlage höhere Investitionen als eine Verbrennungsgasanlage gleicher Kapazität.

Stickstoff oder aus Verbrennungsgas gewonnenes Gemisch aus Stickstoff und Kohlendioxid wird in der Technik seit langem für sonstige Zwecke benutzt, besonders zum Inertisieren von Anlagen, die brennbare Stoffe verarbeiten oder überhaupt zum Verdrängen oder Verdünnen des Luftsauerstoffes. Bekannte Vorrichtungen zur Erzeugung dieser Gase wurden vorwiegend als Inertgaserzeuger entwickelt. Für kleinere Mengen wird wegen der geringeren Investitionskosten die Anwendung von Verbrennungsinertgas (Abgas) bevorzugt, wenn der spezielle Anwendungsfall nicht reinen Stickstoff verlangt. Für größere Mengen, insbesondere, wenn nicht nur gelegentlicher sondern kontinuierlicher Bedarf besteht, ist die Luftzerlegung wegen des geringeren Energieverbrauchs pro erzeugter Inertgasmenge vorteilhafter.

Der Erfindung liegt die Aufgabe zugrunde, eine Vorrichtung der im Oberbegriff des Patentanspruchs 1 angegebenen Art zu schaffen, die es ermöglicht, große Mengen von Injektionsgas kostengünstig und mit geringem Energieaufwand zu erzeugen.

Die Lösung dieser Aufgabe erfolgt bei einer ersten Variante der Erfindung mit den im kennzeichnenden Teil des Patentanspruchs 1 angegebenen Merkmalen und bei einer zweiten Variante mit den im kennzeichnenden Teil des Anspruchs 2 angegebenen Merkmalen.

Die erfindungsgemäße Vorrichtung stellt eine Kombination aus einer thermischen Energieerzeugungsanlage und einer Luftzerlegungsanlage dar. Dabei erzeugt die thermische Energieerzeugungsanlage die Energie für den Betrieb der Luftzerlegungsanlage. Jede der beiden Anlagen kann für den jeweiligen Anwendungsfall optimiert werden. Die erfindungsgemäße Vorrichtung hat einen deutlich geringeren Energiebedarf als wenn dieselbe Gasmenge in Form von Stickstoff mit einer Luftzerlegungsanlage erzeugt würde. Auch hinsichtlich der Investitionskosten ist die erfindungsgemäße kombinierte Vorrichtung günstiger als eine Luftzerlegungsanlage, die dieselbe Gasmenge ausschließlich mit einer thermischen Energieerzeugungsanlage bereitstellt. Der Vorteil des geringeren Energieverbrauchs ergibt sich bereits dann, wenn das erzeugte Gasgemisch (z.B. zur Verwendung als Inertgas) drucklos abgegeben wird, er ist jedoch noch ausgeprägter, wenn das Gasgemisch verdichtet abgegeben wird, wie es zur Entölung von Erdöllagerstätten immer erforderlich ist. In diesem Fall kann auch die Verdichtung des Gasgemisches mit der von der thermischen Energieerzeugungsanlage bereitgestellten Energie erfolgen, wie es in den Patentansprüchen 4 und 5 angegeben ist.

Gasturbinen, die als thermische Energieerzeugungsanlage benutzt werden können, werden mit hohem Luftüberschuß gefahren. Das Verbrennungsgas (Abgas) einer normalen Gasturbine ist daher zur Gewinnung eines Stickstoff/ Kohlendioxid-Gemisches nicht geeignet, weil es zuviel Sauerstoff enthält. Nach Patentanspruch 6 wird das Problem dadurch gelöst, daß ein Teil der gekühlten Abgase zu der Gasturbine zurückgeführt wird, so daß die Gasturbine ein Gemisch aus Luft und Abgas ansaugt. Das Verhältnis Luft: Abgas kann so eingestellt werden, daß der in dem angesaugten Gasgemisch enthaltene Sauerstoff in der Brennkammer der Gasturbine restlos umgesetzt wird.

Eine andere Möglichkeit besteht darin, daß der Gasturbine ein Abhitze-Kessel mit Zusatzbrenner nachgeschaltet ist, wobei der restliche Sauerstoff in dem Zusatzbrenner umgesetzt wird. Infolge des hohen Luftüberschusses einer normalen Gasturbine muß ein überwiegender Anteil der Energieerzeugung auf den zusatzgefeuerten Abhitze-Kessel verlagert werden, um allen Sauerstoff zu beseitigen. Die Energieerzeugung als ganzes erhält somit eher den Charakter eines Dampfkessels mit vorgeschalteter Gasturbine. Durch Kombination der vorher beschriebenen Abgasrückführung mit einem zusatzbefeuerten Abhitzekessel kann das Verhältnis Gasturbinenleistung:Dampfturbinenleistung in jeder gewünschten Weise eingestellt und dadurch an die Leistungsaufnahme der verwendeten Maschinen angepaßt werden.

Wenn aller Sauerstoff innerhalb des Gasturbinenprozesses umgesetzt werden soll und hohe Anforderungen an die Reinheit des Gasgemisches gestellt werden, dann können gemäß Patentanspruch 8 verdichtete Abgas oder erzeugtes Gasgemisch in das flammenferne Ende der Brennkammer oder auch in den Verbindungskanal zwischen Brennkammer und Turbine eingeblasen werden. Diese Maßnahme ermöglicht es, in der Brennkammer eine höhere Temperatur einzustellen als bei einer normalen Gasturbine, und dadurch die Verbrennungsreaktion zu begünstigen. Nach dem Vermischen des in der Brennkammer entstandenen Verbrennungsgases mit dem eingeblasenen Gas ist die Gastemperatur gerade so hoch wie für die Turbine zulässig ist. Bei den derzeitigen Gasturbinen kann diese Temperatur bis nahe 1000°C betragen.

Die Patentansprüche 10 und 11 beziehen sich auf Varianten, bei denen die Luftzerlegungsanlage die Stickstoff-Fraktion mit überatmosphärischem Druck liefert, wobei der Druck für die weitere Verdichtung oder zum Injizieren in die Brennkammer ausgenutzt wird.

Im folgenden werden unter Bezugnahme auf die Zeichnungen Ausführungsbeispiele der Erfindung näher erläutert.

Es zeigen:

Fig. 1          ein Diagramm eines Ausführungsbeispiels der ersten Variante der Vorrichtung,

Fig. 2          ein weiteres Ausführungsbeispiel der ersten Variante,

Fig. 3          ein Ausführungsbeispiel der zweiten Variante,

Fig. 4          ein weiteres Ausführungsbeispiel der zweiten Variante und

Fig. 5 und 6    Ausführungsbeispiele mit zusätzlicher Dampferzeugung.

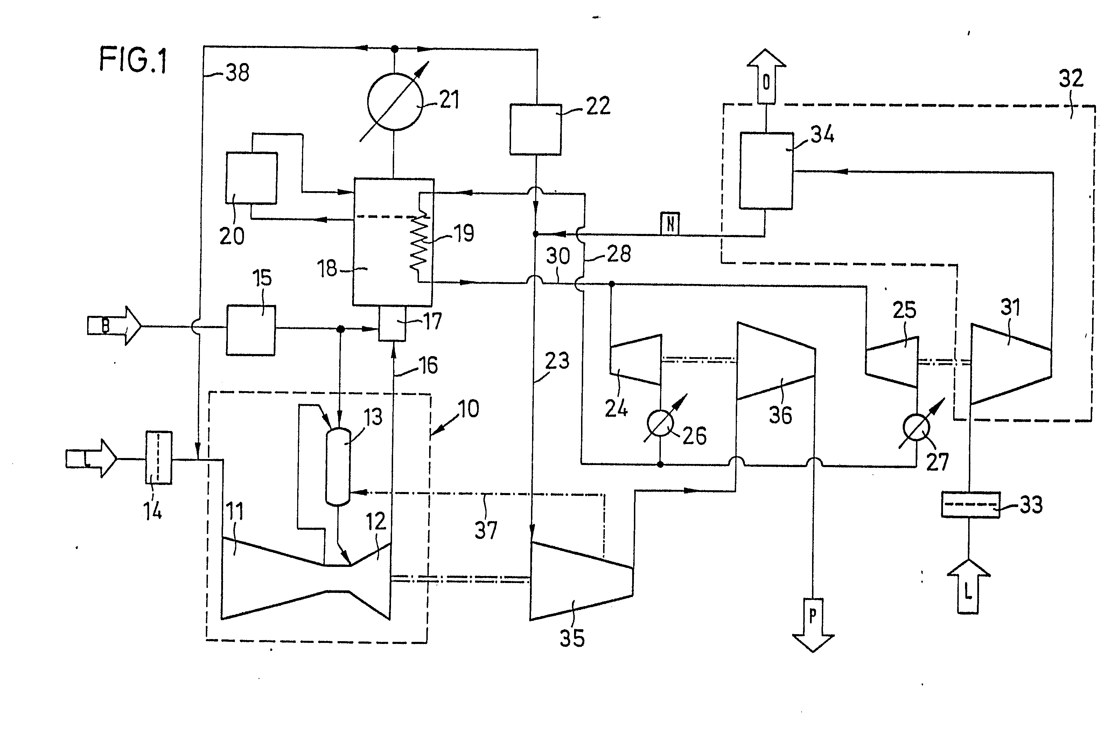

Die Gasturbine 10 gemäß Fig. 1 besteht in bekannter Weise aus einem Luftkompressor 11, einer (oder mehreren) Brennkammern 13 und einem Turbinenteil 12. In der Brennkammer entstehen aus Druckluft und Brennstoff Verbrennungsgase, die in der Turbine arbeitsleistend entspannt werden. Vor dem Lufteinlaß des Luftkompressors 11 ist ein Luftfilter 14 angeordnet, durch den die Luft L angesaugt wird. Der Brennstoff B wird der Brennkammer 13 über die Brennstoffreinigungsvorrichtung 15 zugeführt.

Da das Abgas der Gasturbine 10 noch unverbrauchten Sauerstoff enthalten kann, ist die Abgasleitung 16 mit einem Zusatzbrenner 17 verbunden, dem ebenfalls gereinigter Kraftstoff zugeführt wird. In dem Zusatzbrenner 17 wird Sauerstoff, der in den Abgasen enthalten sein kann, umgesetzt. Die den Zusatzbrenner 17 verlassenden Abgase werden dem Abhitzekessel 18 zugeführt, bei dem es sich um einen Wärmetauscher handelt. Die Abgase geben hier Wärme an die Heizschlange 19 eines Dampfkreislaufs ab. Die Heizschlangen 19 bestehen aus Speisewasservorwärmer, Siederohren und Dampfüberhitzer, wobei eine - in der Zeichnung weggelassene Dampftrommel dazwischengeschaltet ist. Zusätzlich ist noch eine Nachverbrennungsvorrichtung 20 vorgesehen, die den Rest Sauerstoff umsetzt. Die Abgase werden dann über einen Gaskühler 21 und eine Gasreinigungsvorrichtung 22 der Sammelleitung 23 zugeführt.

Die Heizschlange 19 ist Bestandteil des Dampfkreislaufs, der die Dampfturbinen 24 und 25 in Parallelschaltung enthält. Jeder Turbine 24 bzw. 25 ist ein Kondensator 26 bzw. 27 nachgeschaltet, der über eine Rücklaufleitung 28 mit dem Einlaß der Heizschlange 19 verbunden ist. Der Auslaß der Heizschlange 19 ist über die Dampfleitung 30 mit den Einlässen der Dampfturbinen 24 und 25 verbunden.

Die Gasturbine 10 bildet zusammen mit dem Zusatzbrenner 17 und der Abhitzekessel 18 die thermische Energieerzeugungsanlage 10, 17, 18. Die Nachverbrennungsvorrichtung 20 steht mit dem Abhitzekessel in Verbindung, derart daß die Temperatur des Abgases der optimalen Temperatur für die Nachverbrennungsreaktion entspricht. Im Anschluß an die Nachverbrennung geht das Abgas zur weiteren Kühlung in den Abhitzekessel 18 zurück.

Die Welle der Dampfturbine 25 treibt den Luftkompressor 31 der Luftzerlegungsanlage 32. Die Ansaugleitung des Luftkompressors 31 ist über einen Luftfilter 33 mit einem Lufteinlaß L verbunden. Die Luftzerlegungsanlage 32 enthält außer dem Luftkompressor 31 den Luftzerlegungsteil 34, dessen einer Auslaß O die Sauerstoff-Fraktion und dessen anderer Auslaß N die Stickstoff-Fraktion N der Luft liefert. Die Stickstoff-Fraktion N wird der Sammelleitung 23 zugeführt und dort mit dem Rauchgas vermischt.

Die Sammelleitung 23 führt zu einem Kompressor 35, der von der Ausgangswelle der Gasturbine 10 angetrieben wird und das aus Abgas und Stickstoff bestehende Gemisch in einer ersten Stufe verdichtet. Das Gemisch wird in einem weiteren Kompressor 36 in einer zweiten Stufe verdichtet und anschließend dem Produktauslaß P zugeführt. Der Kompressor 36 wird von der Ausgangswelle der Dampfturbine 24 angetrieben.

Über die strichpunktiert dargestellte Leitung 37 kann ein Teil des Gemisches aus Abgas und Inertgas von dem Kompressor 35 der Brennkammer 13 zugeführt werden, um in der Reaktionszone der Brennkammer eine sauerstoffreichere Verbrennung zu ermöglichen und die Temperatur in der Reaktionszone der Brennkammer zu erhöhen. Die Leitung 37 führt in das flammenferne Ende der Brennkammer 13 oder in die Verbindung zwischen Brennkammer 13 und Turbinenteil 12 hinein.

Ferner wird hinter dem Gaskühler 21 ein Teil der gekühlten Abgase abgezweigt und über Leitung 38 in die Luftansaugleitung des Luftkompressors 11 eingeführt. Die Gasturbine 10 saugt somit ein Gemisch aus Luft und Abgas an, um den Luftüberschuß zu verringern bzw. um einen Teil des benötigten Massenstromes durch Abgase zu ersetzen.

Aus der obigen Beschreibung ergibt sich, daß die thermische Energieerzeugungsanlage 10,17,18 einerseits mechanische Energie an den Kompressor 35 und andererseits thermische Energie an den Dampfkreislauf abgibt, um das erzeugte Injektionsgas mit dem erforderlichen Druck P bereitzustellen, und um den Kompressor 31 der Luftzerlegungsanlage 32 zu betreiben. Durch die verschiedenen angegebenen Maßnahmen kann erreicht werden, daß das aus einer Mischung von Abgasen und Stickstoff bestehende Gemisch frei von Sauerstoff ist. Dies beruht auf einer vollständigen Umsetzung des angesaugten Sauerstoffs in den verschiedenen Brennräumen und durch geeignete Ausgestaltung der Brennräume.

Eine Vergleichsberechnung für die Erzeugung von $200.000 \ m^3$ Gas pro Stunde ergibt folgendes Verhältnis:

$$a:b:c:=975:750:600.$$

Hierin stellt a den Energieaufwand dar, der sich ergibt, wenn die gesamte Gasmenge aus Abgas besteht, b den Energieaufwand, wenn die gesamte Gasmenge aus Stickstoff besteht, der durch Luftzerlegung gewonnen wird, und c ist der Energieaufwand bei der Herstellung des Gasgemisches mit der beschriebenen Vorrichtung.

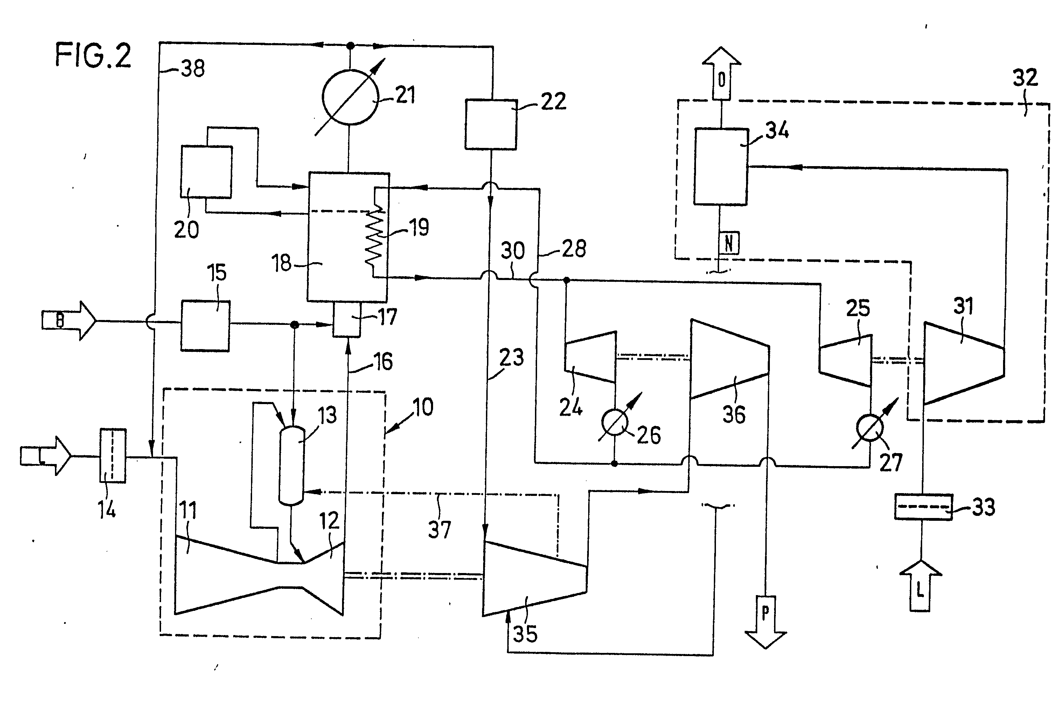

Die Ausführungsbeispiele der Fign. 2 bis 4 gleichen weitgehend demjenigen von Fig. 1, so daß die nachfolgenden Erläuterungen sich auf die jeweiligen Unterschiede beschränken.

Bei dem Ausführungsbeispiel der Fig. 2 wird die Stickstoff-Fraktion N der Luftzerlegungsanlage 32 nicht in die Ansaugseite des Kompressors 35 eingegeben, sondern in eine Zwischenstufe dieses Kompressors. Dies liegt daran, daß die Luftzerlegungsanlage die Stickstofffraktion mit einem überatmosphärischen Druck liefert. In diesem Fall erfolgt die Vermischung des Stickstoffs mit den Abgasen in dem Kompressor 35.

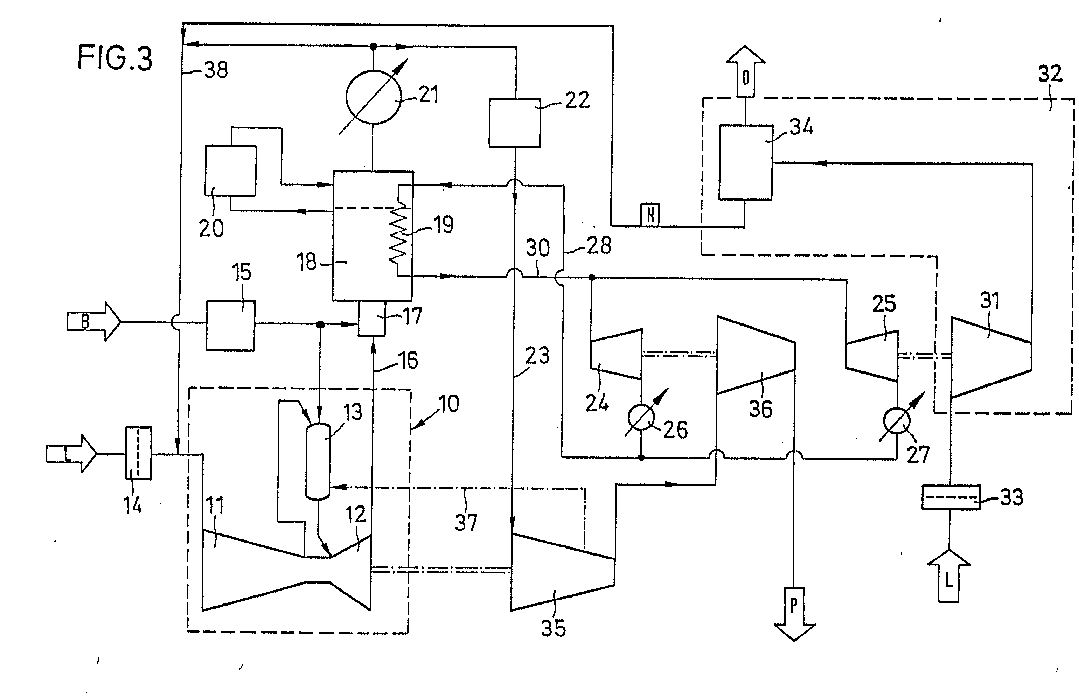

Die Ausführungsform der Fig. 3 ist dann besonders geeignet, wenn eine Luftzerlegungsanlage verwendet wird, die die Stickstoff-Fraktion mit höherem Rest-Sauerstoffgehalt liefert. Solche Luftzerlegungsanlagen arbeiten nach einem relativ einfachen Verfahren und sie sind kostengünstiger als Luftzerlegungsanlagen, die den Stickstoff mit hoher Reinheit liefern. Gemäß Fig. 3 wird die Stickstoff-Fraktion N nicht einer Sammelleitung zugeführt, sondern der Leitung 38, die zu dem Einlaß des Luftkompressors 11 der Gasturbine 10 führt. Die Stickstoff-Fraktion mit dem Restsauerstoffgehalt vermischt sich mit der angesaugten Luft L und nimmt an der Verbrennungsreaktion teil. Dadurch wird der Sauerstoffdurchsatz der Gasturbine verrinert, indem ein Teil der angesaugten Gase aus Stickstoff besteht. Der Stickstoff durchläuft die Gasturbine 10 und findet sich nachfolgend in den Abgasen wieder. Ein Teil des Stickstoffs, der der Leitung 38 zugeführt wird, kann abgezweigt werden, um dem Kompressor 35 zugeführt zu werden.

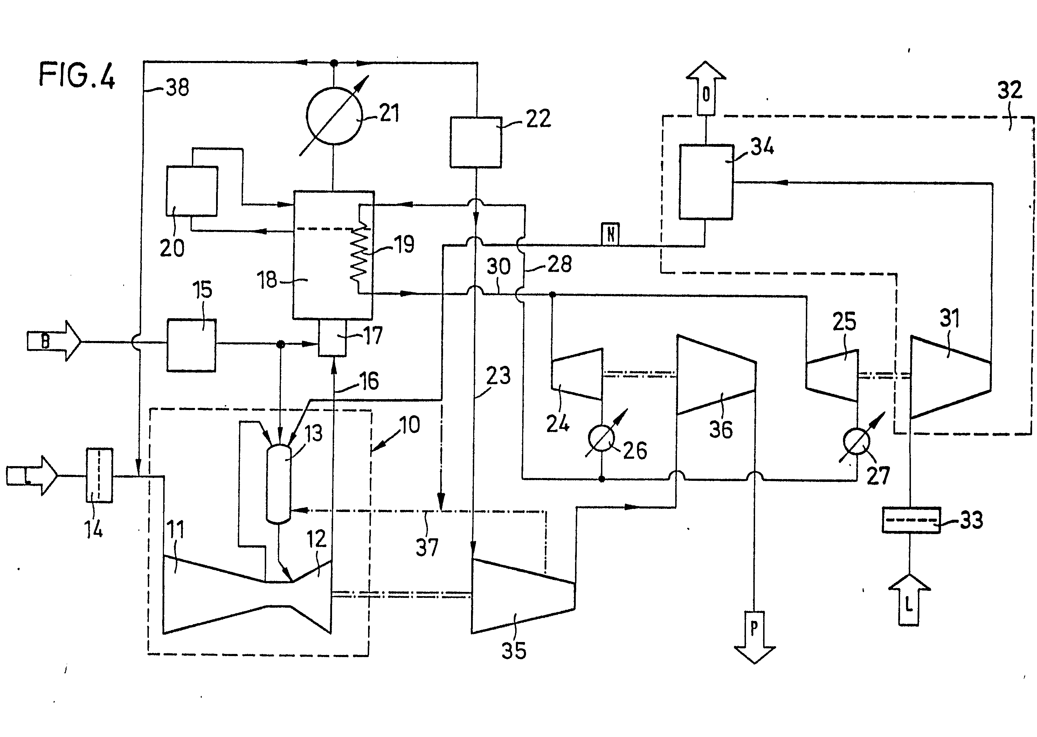

Bei dem Ausführungsbeispiel der Fig. 4 wird wiederum eine Luftzerlegungsanlage 32 benutzt, die den Stickstoff oder eine stickstoffreiche Fraktion mit Rest-Sauerstoff unter überatmosphärischem Druck liefert. Die Stickstoff-Fraktion N wird hierbei der Brennkammer 13 der Gasturbine 10 zugeführt und zwar entweder einem flammenseitigen Einlaß (durchgezogene Linie) oder einem flammenfernen Einlaß bzw. der Verbindungsleitung zwischen Brennkammer 13 und Turbinenteil 12 (strichpunktierte Linie). Die Injektion der Fraktion erfolgt in Flammennähe, wenn die Fraktion einen Sauerstoffanteil enthält. Der Sauerstoffanteil wird bei der Verbrennung umgesetzt. Dagegen erfolgt die Injektion im flammenfernen Bereich, wenn die Stickstoff-Fraktion im wesentlichen rein ist. Durch das Injizieren von Inertgas wird die Turbineneinlaßtemperatur wesentlich herabgesetzt. In jedem Fall gelangt der Stickstoff, der der Brennkammer 13 zugeführt wird, in die Abgase.

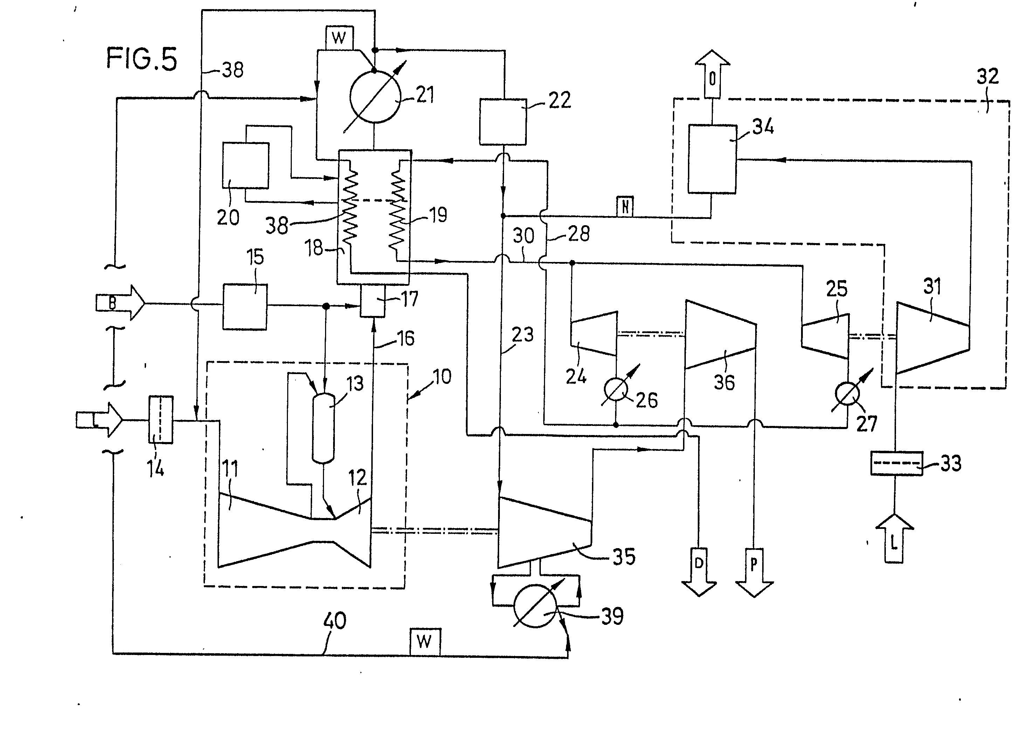

Bei der Verbrennung von Kohlenwasserstoffen entsteht Wasser, das hinter dem Kühler 21 und hinter dem Zwischenkühler des Kompressors 35 anfällt. Fig. 5 zeigt ein Ausführungsbeispiel, bei dem dieses Wasser benutzt wird, um als Dampfkondensat D zusätzlich zu dem Produktgas P abgeführt zu werden. Aus einem Zwischenkühler 39 des Kompressors 35 wird das Wasser W abgeführt und einem Verdampfer 38 zugeführt, der zusätzlich zu den Heizschlangen 19 im Abhitzekessel 18 enthalten ist. Der den Verdampfer 38 verlassende Dampf D kann zusätzlich zu dem Produktgas P in die Erdöllagerstätte eingepreßt werden, oder für sonstige Zwecke im Ölfeld Verwendung finden. Dem Verdampfer 38 wird außerdem vom Zwischenkühler 39 kommenden Wasser auch das Wasser W zugeführt, das hinter dem Kühler 21 anfällt. Auf diese Weise wird das bei der Verbrennung der Kohlenwasserstoffe entstehende Wasser zunächst in Dampf umgesetzt und anschließend abgeführt.

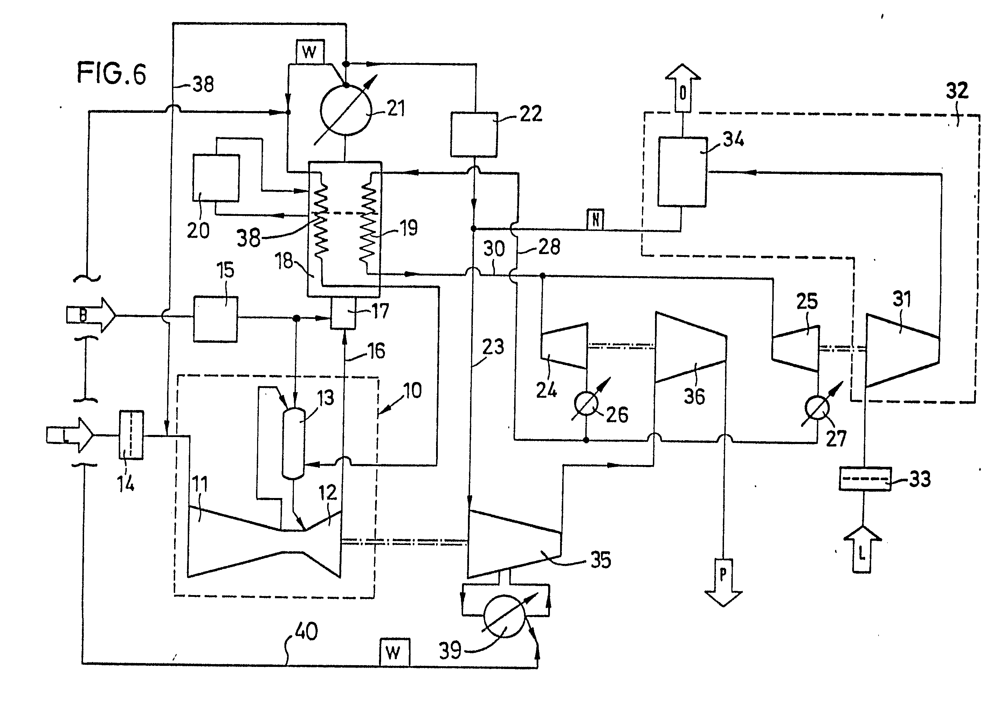

Das Ausführungsbeispiel der Fig. 6 gleicht demjenigen der Fig. 5, mit Ausnahme der Tatsache, daß der den Verdampfer 38 verlassende Dampf nicht abgeführt, sondern in die Brennkammer 13 zurückgeführt wird. In diesem Fall existiert ein geschlossener Wasser/Dampf-Kreislauf, in dem demineralisiertes zirkuliert. Der der Brennkammer 13 zugeführte Dampf ergänzt das Brennstoff/Luft-Volumen, so daß die Gasturbine 10 mit geringerem Luftdurchsatz betrieben werden kann.

In den Fig. 5 und 6 wird in der Praxis anstelle der dargestellten Leitungsverzweigung ein besonderer Abscheidebehälter zum Trennen von Gas und Kondensat vorgesehen. Es kann auch ein kombiniertes Gerät mit Kühler- und Abscheider-Funktion benutzt werden.

In Verbindung mit der Gaserzeugungsvorrichtung bringt das Einblasen von Dampf in die Gasturbine neben einer Verbesserung des Wirkungsgrades noch weitere Vorteile: Der eingeblasene Dampf kann wie rückgeführtes Abgas bzw. erzeugtes Gasgemisch verwendet werden. Die Verbrennungstemperatur in der Brennkammer 13 kann erhöht werden. Durch anschließendes Vermischen mit dem eingeblasenen Dampf wird die Turbineneintrittstemperatur auf die zulässige Höhe reduziert. In dem man den einzublasenden Dampf im Abhitzekessel 18 erzeugt, entzieht man die dafür nötige Wärme dem Dampfkreislauf. Es wird also Leistung von den Dampfturbinen zur Gasturbine verlagert. Die Dampfeinblasung kann dazu verwendet werden, die Leistungen der Dampf- und Gasturbinen optimal an die anzutreibenden Kompressoren anzupassen.

Durch Kombination der Merkmale der verschiedenen Abwandlungen kann die erfindungsgemäße Gaserzeugungsanlage an unterschiedliche Erfordernisse angepaßt werden, nämlich hinsichtlich des Einsatzes aller bekannten Luftzerlegungsanlagen (sei es daß diese reinen oder Restsauerstoff enthaltenden Stickstoff, atmosphärischen oder unter Überdruck stehenden Stickstoff abgeben) und hinsichtlich verschiedener Gasmengen und Abgabedrücke (sei es daß ein oder mehrgehäusige Verdichtungsanlagen erforderlich sind oder verschiedene Verdichtertypen, wie Axial-, Radial- oder Kolbenkompressoren zu kombinieren sind) indem die Leistungen der Gasturbinen, Dampfturbinen oder sonstigen Kraftmaschinen einerseits und der Arbeitsmaschine andererseits aufeinander abgestimmt werden können.

ANSPRÜCHE:

1. Vorrichtung zur Erzeugung von Injektionsgas, vorzugsweise zum Austreiben von Erdöl aus Lagerstätten, mit einer thermischen Energieerzeugungsanlage (10,17,18,19,24-29), die mit Brennstoff (B) gespeist wird und Abgase erzeugt, d a d u r c h   g e k e n n z e i c h n e t , daß eine Luftzerlegungsanlage (32) mit der thermischen Energieerzeugungsanlage (10,17,18) derart gekoppelt ist, daß diese die Energie für den Antrieb der Luftzerlegungsanlage (32) liefert und daß eine Stickstoff-Fraktion (N) der Luftzerlegungsanlage (32) und mindestens ein Teil des Abgases einer gemeinsamen Sammeleinrichtung (23) zugeführt werden.

2. Vorrichtung zur Erzeugung von Injektionsgas, vorzugsweise zum Austreiben von Erdöl aus Lagerstätten, mit einer thermischen Energieerzeugungsanlage (10,17,18,19,24-29), die mit Brennstoff (B) gespeist wird und Abgase erzeugt, dadurch gekennzeichnet, daß eine Luftzerlegungsanlage (32) mit der thermischen Energieerzeugungsanlage (10,17,18, 19,24-29) derart gekoppelt ist, daß diese die Energie für den Antrieb der Luftzerlegungsanlage (32) liefert und daß mindestens ein Teil einer Stickstoff-Fraktion (N) der Luftzerlegungsanlage (32) der Verbrennungsluft der thermischen Energieerzeugungsanlage (10,17,18) beigemischt wird.

3. Vorrichtung nach Anspruch 1 oder 2, dadurch gekennzeichnet, daß die thermische Energieerzeugungsanlage (10,17,18) eine Brennkraftmaschine (10) und einen die Abgase der Brennkraftmaschine kühlenden Abhitze-Kessel (18) aufweist, daß der Abhitze-Kessel (18) an einen mindestens eine Dampfturbine (24,25) enthaltenden Dampfkreislauf angeschlossen ist und daß die Dampfturbine (25) einen Kompressor (31) der Luftzerlegungsanlage (32) antreibt.

4. Vorrichtung nach Anspruch 3, dadurch gekennzeichnet, daß die Brennkraftmaschine (10) einen in einer Sammelleitung (23) vorgesehenen ersten Kompressor (35) treibt.

5. Vorrichtung nach Anspruch 3 oder 4, dadurch gekennzeichnet, daß der Dampfkreislauf eine weitere Turbine (24) enthält, die einen dem ersten Kompressor nachgeschalteten weiteren Kompressor (36) antreibt.

6. Vorrichtung nach einem der Ansprüche 1 bis 5, dadurch gekennzeichnet, daß die thermische Energieerzeugungsanlage (10,17,18) eine Gasturbine (10) oder mehrere enthält, daß ein Teil der Abgase der Gasturbinen oder des erzeugten Gasgemisches aus der Sammelleitung (23) zu deren Luftansaugeinlaß rückgeführt und mit der angesaugten Luft in einem solchen Verhältnis vermischt wird, daß der Sauerstoffgehalt der Abgase im wesentlichen auf Null reduziert wird.

7. Vorrichtung nach Anspruch 6, dadurch gekennzeichnet, daß zwischen den Gasturbinen (10) und einem Abhitze-Verwerter (18) ein Zusatzbrenner (17) vorgesehen ist.

8. Vorrichtung nach einem der Ansprüche 1 bis 7, dadurch gekennzeichnet, daß die thermische Energieerzeugungsanlage (10,17,18) eine Gasturbine (10) enthält und daß die Abgas-Auslaßleitung der thermischen Ernergieerzeugungsanlage (10,17,18) oder die Sammelleitung (23) für erzeugtes Gasgemisch über einen Kompressor (35) mit einem Einlaß oder mit dem Auslaß der Brennkammern (13) der Gasturbine (10) verbunden ist. .

9. Vorrichtung nach einem der Ansprüche 1 bis 8, dadurch gekennzeichnet, daß die Gasturbine (10) eine Brennkammer (13) für praktisch vollständige stöchiometrische Verbrennung oder für praktisch vollständige Reaktion eines Gemisches aus Brennstoff und Luft, vermischt mit Abgas und/oder Stickstoff aufweist.

10. Vorrichtung nach einem der Ansprüche 1 bis 9, dadurch gekennzeichnet, daß bei Verwendung einer Luftzerlegungsanlage (32) die eine stickstoffreiche Funktion mit überatmosphärischen Druck liefert, diese Fraktion einer Zwischenstufe des ersten Kompressors (35) zugeführt wird.

11. Vorrichtung nach einem der Ansprüche 1 bis 9, dadurch gekennzeichnet, daß bei Verwendung einer Luftzerlegungsanlage (32) die eine stickstoffreiche Fraktion mit überatmosphärischem Druck liefert, diese Fraktion in die Brennkammer (13) der thermischen Energieerzeugungsanlage (10) eingeführt wird.

12. Vorrichtung nach einem der Ansprüche 1 bis 11, dadurch gekennzeichnet, daß der Abhitzekessel (18) einen zusätzlichen Verdampfer (38) enthält, dem im Abgas enthaltenes Dampfkondensat zugeführt wird und das von einem Zwischenkühler eines in der Abgasleitung vorgesehenen Kompressors (35) eine Leitung (40) zum Einlaß des Verdampfers (38) führt.

13. Vorrichtung nach Anspruch 12, dadurch gekennzeichnet, daß der Auslaß des Verdampfers (38) mit einem Einlaß der Brennkammer (13) verbunden.

FIG.1

-1/6-

0162368

FIG.2

-2/6-

0162368

FIG.3

FIG.4

FIG.5

0162368

-5/6-

FIG.6